# EUROPÄISCHE PATENTSCHRIFT

(11) **EP 1 311 606 B1**
(45) Veröffentlichungstag und Bekanntmachung des Hinweises auf die Patenterteilung: **01.03.2006**
(21) Anmeldenummer: 01971863.4
(22) Anmeldetag: 03.08.2001
(51) Int. Cl.: C08L 21/00, C08L 19/00, C08G 18/69, C08G 18/79

(54) **KAUTSCHUKMISCHUNGEN AUF BASIS VON UNVERNETZTEN KAUTSCHUKEN UND VERNETZTEN KAUTSCHUKPARTIKELN SOWIE MULTIFUNKTIONELLEN ISOCYANATEN AUF POLYURETBASIS**
RUBBER MIXTURES BASED ON NON-VULCANISED RUBBER AND VULCANISED RUBBER PARTICLES AND MULTIFUNCTIONAL ISOCYANATES BASED ON POLYURETHANE
MELANGES DE CAOUTCHOUCS SE BASANT SUR DES CAOUTCHOUCS NON RETICULES ET DES PARTICULES DE CAOUTCHOUC RETICULEES, AINSI QUE DES ISOCYANATES A FONCTIONS MULTIPLES A BASE POLYURET

(30) Priorität: 16.08.2000 DE 10039749
(43) Veröffentlichungstag der Anmeldung: 21.05.2003
(73) Patentinhaber: LANXESS Deutschland GmbH, 51369 Leverkusen (DE)
(72) Erfinder: OBRECHT, Werner, 47447 Moers (DE); MEZGER, Martin, 51399 Burscheid (DE); SUMNER, Anthony, Hythe,Southampton S045 6DT (GB)
(86) Internationale Anmeldenummer: PCT/EP2001/008994
(87) Internationale Veröffentlichungsnummer: WO 2002/014421

(56) Entgegenhaltungen:
- EP-A- 0 854 170
- EP-A- 1 048 692
- EP-A- 1 110 986
- US-A- 4 072 702

## Beschreibung

Die vorliegende Erfindung betrifft Kautschukmischungen auf Basis von unvernetzten Kautschuken und vernetzten Kautschukpartikeln (sogenannten Kautschukgelen) sowie multifunktionellen Isocyanaten auf Polyuretbasis Die erfindungsgemäßen Kautschukmischungen eignen sich zur Herstellung von Kautschukvulkanisaten, die eine vorteilhafte Kombination mechanischer Eigenschaften aufweisen, wie Spannungswert bei 300 % Dehnung, Bruchdehnung, Reißfestigkeit und Abriebwiderstand. Darüber hinaus besitzen die aus den erfindungsgemäßen Kautschukmischungen hergestellten Vulkanisate eine niedrigere Dichte, was sich vorteilhaft auf das Gewicht der aus den Vulkanisaten hergestellten Kautschukformkörpern, insbesondere Reifen bzw. Reifenteile, auswirkt.

Es ist bekannt, dass Kautschukmischungen aus unvernetzten Kautschuken und vernetzten Kautschukpartikeln (Kautschukgele) als Füllstoffe bei der Vulkanisation mit üblichen Vulkanisationsmitteln (z.B. Schwefelvulkanisation) Vulkanisate ergeben, die niedrige Rückprallelastizitäten bei Raumtemperatur (gutes Nassrutschverhalten) und hohe Rückprallelastizitäten bei 70°C (niedriger Rollwiderstand) ergeben.

Verwiesen wird in diesem Zusammenhang beispielsweise auf US-A 5 124 408, US-A 5 395 891, DE-A 197 01 488, DE-A 197 01 487, DE-A 199 29 347, DE-A 199 39 865, DE-A 199 42 620.

Für den technischen Einsatz ist die Verstärkungswirkung der Milaogele in Vulkanisaten (Spannungswert bei 300 % Dehnung -S₃₀₀-, Bruchdehnung -D-, Reißfestigkeit und Abrieb) noch verbesserungswürdig. Dies zeigt sich insbesondere daran, dass zur Einstellung technisch relevanter S₃₀₀-Werte hohe Gelmengen eingesetzt werden müssen. Durch diese hohen Gelmengen kommt es zu einer Überfüllung der Mischungen, wodurch die Reißfestigkeiten und die Bruckdehnungen der Vulkanisate abfallen. Es bestand daher die Aufgabe, Maßnahmen zur Erhöhung des Spannungswerts niedriggefüllter gelhaltiger Kautschukvulkanisate zu finden. Außerdem bestand die Aufgabe darin, den DIN-Abrieb zu vermindern.

Weiterhin ist bekannt, Naturkautschuk mit Ruß als Füllstoff mit Diisocyanaten zu vulkanisieren. Die auf diese Weise erhaltenen Vulkanisate besitzen jedoch nicht befriedigende mechanische Eigenschaften; außerdem haften die Vulkanisate sehr stark an den Metallteilen der benutzten Vulkanisierformen (O. Bayer, Angewandte Chemie, Ausgabe A, 59. Jahrgang, Nr. 9, S. 257-288, September 1947).

Erfindungsgemäß werden nun Kautschukmischungen zur Verfügung gestellt, die die Herstellung von Vulkanisaten mit verbesserten mechanischen Eigenschaften (Produkt aus Spannungswert bei 300 % Dehnung und Bruchdehnung) sowie einer niedrigen Vulkanisatdichte ermöglichen, was beispielsweise bei Reifen bzw. einzelnen Reifenbauteilen erwünscht ist.

Gegenstand der vorliegenden Erfindung sind daher Kautschukmischungen bestehend aus nicht vernetzten, doppelbindungshaltigen Kautschuken (A), vernetzten Kautschukpartikeln (B) sowie multifunktionellen Isocyanaten auf Biuretbasis (C), wobei, jeweils bezogen auf 100 Gew.-Teile (phr) der Kautschukkomponente (A), der Anteil in der Mischung an Komponente (B) 1 bis 150 Gew.-Teile und der Anteil an multifunktionellen Isocyanaten auf Biuretbasis (Komponente C) 1 bis 100 Gew.-Teile beträgt.

Bevorzugte, erfindungsgemäße Kautschukmischungen sind solche, die jeweils bezogen auf 100 Gew.-Teile der Kautschukkomponente (A) 5 bis 100 Gew.-Teile an vernetzten Kautschukpartikeln (Komponente B) und 3 bis 50 Gew.-Teile an multifunktionellen Isocyanaten auf Biuretbasis (Komponente C) besitzen.

Unter doppelbindungshaltigen Kautschuken versteht man solche Kautschuke, die nach DIN/ISO 1629 als R-Kautschuke bezeichnet werden. Diese Kautschuke haben in der Hauptkette eine Doppelbindung. Hierzu gehören beispielsweise:
- NR:: Naturkautschuk
- SBR:: Styrol/Butadienkautschuk
- BR:: Polybutadienkautschuk
- NBR:: Nitrilkautschuk
- IIR:: Butylkautschuk
- BIIR:: bromierte Isobutylen/Isopren-Copolymerisate mit Bromgehalten von 0,1-10 Gewichtsprozent
- CIIR:: chlorierte Isobutylen/Isopren-Copolymerisate mit Chlorgehalten von 0,1-10 Gewichtsprozent
- HNBR:: Hydrierter bzw. teilhydrierter Nitrilkautschuk
- SNBR:: Styrol/Butadien/Acrylnitril-Kautschuk
- CR:: Polychloropren
- ENR:: Epoxydierter Naturkautschuk oder Mischungen davon
- X-NBR:: carboxylierte Nitrilkautschuke
- X-SBR:: carboxylierte Styrol-Butadien-Copolymerisate.

Unter doppelbindungshaltigen Kautschuken sollen aber auch solche Kautschuke verstanden werden, die nach DIN/ISO 1629 als M-Kautschuke bezeichnet werden und neben der gesättigten Hauptkette Doppelbindungen in der Seitenkette aufweisen. Hierzu gehört z.B. EPDM.

Die in die erfindungsgemäßen Kautschukmischungen einzusetzenden doppelbindungshaltigen Kautschuke der oben genannten Art können selbstverständlich durch solche funktionelle Gruppen modifiziert sein, die mit den einzusetzenden funktionellen Isocyanaten auf Polyuretbasis zu reagieren vermögen und - wie nachfolgend noch beschrieben wird - eine Ankopplung der vernetzten Kautschukpartikel an die umgebende Kautschukmatrix im vulkanisierten Zustand zu verbessern vermögen.

Besonders bevorzugt sind insbesondere solche nicht vernetzten Kautschuke, die durch Hydroxyl-, Carboxyl-, Amino- und/oder Amidgruppen funktionalisiert sind. Die Einführung funktioneller Gruppen kann direkt bei der Polymerisation durch Copolymerisation mit geeigneten Comonomeren oder nach der Polymerisation durch Polymermodifikation erfolgen.

Die Einführung solcher funktioneller Gruppen durch Polymermodifikation ist bekannt und beispielsweise beschrieben in M.L. Hallensleben "Chemisch modifizierte Polymere" in Houben-Weyl Methoden der Organischen Chemie, 4. Auflage, "Makromolekulare Stoffe" Teil 1-3; Georg Thieme Verlag Stuttgart, New York, 1987; S. 1994-2042, DE-A 2 653 144, EP-A 464 478, EP-A 806 452 und Deutsche Patentanmeldung Nr. 198 32 459.6.

Die Menge an funktionellen Gruppen in den Kautschuken beträgt üblicherweise 0,05 bis 25 Gew.-%, bevorzugt 0,1 bis 10 Gew.-%.

Als vernetzte Kautschukpartikel, sogenannte Kautschukgele, werden in die erfindungsgemäßen Gemische insbesondere solche eingesetzt, die durch entsprechende Vernetzung folgender Kautschuke erhalten wurden:
- BR:: Polybutadien,
- ABR:: Butadien/Acrylsäure-C1-4Alkylestercopolymere,
- IR:: Polyisopren,
- SBR:: Styrol-Butadien-Copolymerisate mit Styrolgehalten von 1-60, vorzugsweise 5-50 Gewichtsprozent,
- X-SBR:: carboxylierte Styrol-Butadien-Copolymerisate
- FKM:: Fluorkautschuk,
- ACM:: Acrylatkautschuk,
- NBR:: Polybutadien-Acrylnitril-Copolymerisate mit Acrylnitrilgehalten von 5-60, vorzugsweise 10-50 Gewichtsprozent,
- X-NBR:: carboxylierte Nitrilkautschuke
- CR:: Polychloropren
- IIR:: Isobutylen/Isopren-Copolymerisate mit Isoprengehalten von 0,5-10 Gewichtsprozent,
- BIIR:: bromierte Isobutylen/Isopren-Copolymerisate mit Bromgehalten von 0,1-10 Gewichtsprozent,
- CIIR:: chlorierte Isobutylen/Isopren-Copolymerisate mit Chlorgehalten von 0,1-10 Gewichtsprozent,
- HNBR:: teil- und vollhydrierte Nitrilkautschuke
- EPDM:: Ethylen-Propylen-Dien-Copolymerisate,
- EAM:: Ethylen/Acrylatcopolymere,
- EVM:: Ethylen/Vinylacetatcopolymere
- CO und ECO:: Epichlorhydrinkautschuke,
- Q:: Silikonkautschuke,
- AU:: Polyesterurethanpolymerisate,
- EU:: Polyetherurethanpolymerisate.

Die erfindungsgemäß einzusetzenden Kautschukpartikel besitzen üblicherweise Teilchendurchmesser von 5 bis 1000 nm, bevorzugt 10 bis 600 nm (Durchmesserangaben nach DIN 53 206). Aufgrund ihrer Vernetzung sind sie unlöslich und in Lösungsmitteln, z.B. Toluol, quellbar. Die Quellungsindizes der Kautschukpartikel (Qᵢ) in Toluol betragen ca. 1 bis 15, vorzugsweise 1 bis 10. Der Quellungsindex wird aus dem Gewicht des lösungsmittelhaltigen Gels (nach Zentrifugation mit 20 000 Upm) und dem Gewicht des trockenen Gels berechnet, wobei Qᵢ = Nassgewicht des Gels/Trockengewicht des Gels bedeutet. Der Gelgehalt der erfindungsgemäßen Kautschukpartikel beträgt üblicherweise 80 bis 100 Gew.-%, bevorzugt 90 bis 100 Gew.-%.

Die Herstellung der einzusetzenden vernetzten Kautschukpartikel (Kautschukgele) aus den zugrundeliegenden Kautschuken der zuvor genannten Art, ist prinzipiell bekannt und beispielsweise beschrieben in US-A 5 395 891 und EP-A 98 100 049.0.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in der deutschen Patentanmeldung Nr. 199 39 865.8.

Selbstverständlich können die vernetzten Kautschukpartikel wie die zuvor erwähnten nicht vernetzten doppelbindungshaltigen Kautschuke ebenfalls durch geeignete funktionelle Gruppen modifiziert sein, die - wie zuvor erwähnt - mit den einzusetzenden multifunktionellen Isocyanaten zu reagieren vermögen und/oder eine Verbesserung der Ankopplung der Kautschukpartikel an die umgebende Kautschukmatrix im vulkanisierten Zustand bewirken.

Als bevorzugte funktionelle Gruppen sind wiederum zu nennen die Hydroxyl-, Carboxyl-, Amino- und/oder Amidgruppen. Der mengenmäßige Anteil dieser funktionellen Gruppen entspricht dem Anteil dieser Gruppen bei den zuvor genannten und nicht vernetzten, doppelbindungshaltigen Kautschuken.

Die Modifizierung der vernetzten Kautschukpartikeln (Kautschukgelen) und die Einführung der zuvor genannten funktionellen Gruppen ist dem Fachmann ebenfalls bekannt und beispielsweise beschrieben in den deutschen Patentanmeldungen Nr. 199 19 459.9, 199 29 347.3, 198 34 804.5.

Zu erwähnen sei an dieser Stelle nur die Modifizierung der entsprechenden Kautschuke in wässriger Dispersion mit entsprechenden polaren Monomeren, die eine Hydroxyl-, Amino-, Amid- und/oder eine Carboxylgruppe in die Kautschuke einzuführen vermögen.

Besonders bevorzugt werden in die erfindungsgemäßen Kautschukmischungen modifizierte vernetzte Kautschukpartikel eingesetzt, die an der Oberfläche durch -OH; -COOH; -NH₂; -CONH₂; -CONHR-Gruppen modifiziert sind und in dem zuvor erwähnten Mengenbereich liegen.

Die multifunktionellen Isocyanate auf Polyuretbasis (Komponente C), die mindestens zwei Isocyanatgruppen im Molekül besitzen, leiten sich von folgender idealisierter Grundstruktur ab (DE-A 11 01 394; G. W. Becker, D. Braun, Kunststoffhandbuch, Band 7, Hanser -Verlag; Kapitel 10.1 von G. Mennicken und W. Wieczorrek, "Lacke, Anstrichmittel und Beschichtungen" S. 540 ff); Laas et al. J. prakt. Chem. 336 (1994) 185):

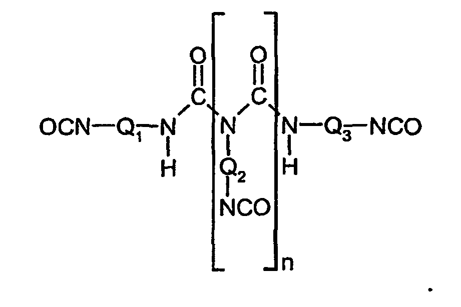

Der Oligomerisierungsgrad n beträgt 1 bis 25, vorzugsweise 1 bis 10. Q₁, Q₂ und Q₃ sind aliphatische, cycloaliphatische und aromatische Brücken wie beispielsweise Hexamethylen-, Toluylen-, Diphenylmethylen-, Naphthylen-Brücken. Q₁, Q₂, Q₃ leiten sich von den bekannten aliphatischen, cycloaliphatischen sowie den aromatischen Diisocyanaten ab. Ein Vertreter der aliphatischen multifunktionellen Isocyanate ist z.B. Hexamethylendiisocyanat (HDI); ein Vertreter der cycloaliphatischen multifunktionellen Isocyanate ist z.B. 1-Isocyanato-3-(isocyanatomethyl)-3,5,5-trimethyl-cyclohexan (Isophorondiisocyanat/IPDI). Als Vertreter der aromatischen multifunktionellen Isocyanate seien genannt: 2,4- und 2,6-Diisocyanatotoluol sowie das entsprechende technische Isomerengemisch (TDI); Diphenylmethandiisocyanate, wie Diphenylmethan-4,4'-diisocyanat, Diphenylmethan-2,4'-diisocyanat und Diphenylmethan-2,2'-diisocyanat sowie die entsprechenden technischen Isomerengemische (MDI). Außerdem sind zu nennen Naphthalin-1,5-diisocyanat (NDI) sowie 4,4',4"-Triisocyanatotriphenylmethan.

Zur Vermeidung einer vorzeitigen Vernetzungsreaktion, z. B. bei der Mischungsherstellung (Reduktion der Scorchanfälligkeit der Mischungen) kann es notwendig sein, die Isocyanatgruppen in blockierter Form einzusetzen, wobei eine temperaturreversible Blockierung (Verkappung) der Isocyanatgruppen mit speziellen Alkoholen, Phenolen, Caprolactamen, Oximen oder β-Dicarbonylverbindungen von Vorteil ist.

Besonders bevorzugt sind multifunktionelle Isocyanate aufPolyuretbasis, die sich vom Hexamethylendiisocyanat (HDI) ableiten:

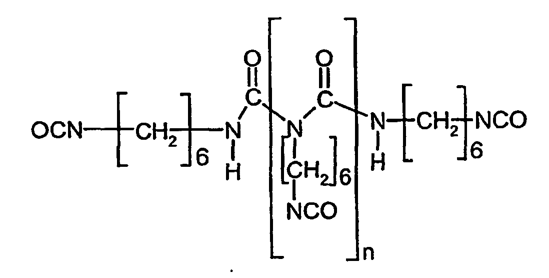

Produkte mit einer derartigen Struktur werden z. B. von der Bayer AG unter den Bezeichnungen Desmodur® N 100 und Desmodur® N 3200 vertrieben.

Die erfindungsgemäßen Kautschukmischungen können weitere bekannte Kautschukhilfsmittel und Füllstoffe enthalten. Besonders geeignete Füllstoffe zur Herstellung der erfindungsgemäßen Kautschukmischungen bzw. Vulkanisate sind z.B.:
- Ruße. Die hierbei zu verwendenden Ruße sind nach dem Flammruß-, Furnace- oder Gasrußverfahren hergestellt und besitzen BET-Oberflächen von 20-200 m²/g wie z.B: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen.
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).

Die Füllstoffe können in Mengen von 0,1 bis 100 Gew.-Teilen, bezogen auf 100 Gew.-Teile der Kautschukkomponente A eingesetzt werden.

Die genannten Füllstoffe können allein oder im Gemisch untereinander eingesetzt werden.

Besonders bevorzugt sind Kautschukmischungen, die 10 bis 100 Gew.-Teile an vernetzten Kautschukpartikeln (Komponente B), 0,1 bis 100 Gew.-Teile Ruß und/oder 0,1 bis 100 Gew.-Teilen an sogenannten hellen Füllstoffen der oben genannten Art, jeweils bezogen auf 100 Gew.-Teile der Kautschukkomponente A, enthalten. Dabei beträgt die Menge an Füllstoffen bei Einsatz eines Gemisches aus Ruß und hellen Füllstoffen maximal ca. 100 Gew.-Teile.

Die erfindungsgemäßen Kautschukmischungen können - wie erwähnt - weitere Kautschukhilfsmittel enthalten, wie Vernetzer, Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie Triethanolamin, Polyethylenglykol, Hexantriol, Bis-(triethoxysilyl-propyl)-tetrasulfid. Die Kautschukhilfsmittel sind beispielsweise beschrieben in J. van Alphen, W.J.K. Schönbau, M. van Tempel Gummichemikalien, Berliner Union GmbH Stuttgart 1956 sowie in Handbuch für die Gummiindustrie, Bayer AG, 2. Auflage, 1991.

Die Kautschukhilfsmittel werden in üblichen Mengen, die sich u.a. nach dem Verwendungszweck richten, eingesetzt. Übliche Mengen sind beispielsweise 0,1 bis 50 Gew.-Teile, bezogen auf 100 Gew.-Teile Kautschuk (A).

Darüber hinaus können die erfindungsgemäßen Kautschukmischungen noch übliche Vernetzer wie Schwefel, Schwefelspender, Peroxide oder andere Vernetzungsmittel, wie Düsopropenylbenzol, Divinylbenzol, Divinylether, Divinylsulfon, Diallylphthalat, Triallylcyanurat, Triallylisocyanurat, 1,2-Polybutadien, N,N-m-Phenylenmaleinimid und/oder Triallyltrimellitat enthalten. Außerdem kommen noch in Betracht die Acrylate und Methacrylate von mehrwertigen, vorzugsweise 2 bis 4-wertigen C₂₋bis C₁₀-Alkoholen, wie Ethylenglykol, Propandiol-1,2-butandiol, Hexandiol, Polyethylenglykol mit 2 bis 20, vorzugsweise 2 bis 8, Oxyethyleneinheiten, Neopentylglykol, Bisphenol-A, Glycerin, Trimethylpropan, Pentaerythrit, Sorbit mit ungesättigten Polyestern aus aliphatischen Di- und Polyolen sowie Maleinsäure, Fumarsäure und/oder Itaconsäure.

Bevorzugt werden als Vernetzer eingesetzt: Schwefel und Schwefelspender in den bekannten Mengen, beispielsweise in Mengen von 0,1 bis 10, bevorzugt 0,5 bis 5, bezogen auf 100 Gew.-Teile an Kautschukkomponente (A).

Die erfindungsgemäßen Kautschukmischungen können darüber hinaus noch Vulkanisationsbeschleuniger der bekannten Art enthalten, wie Mercaptobenzothiazole, Mercaptosulfenamide, Guanidine, Thiurame, Dithiocarbamate, Thioharnstoffe, Thiocarbonate und/oder Dithiophosphate. Die Vulkanisationsbeschleuniger werden ebenso wie die Vernetzer in Mengen von ca. 0,1 bis 10 Gew.-Teilen, bevorzugt 0,1 bis 5 Gew.-Teilen, bezogen auf 100 Gew.-Teile an Kautschukkomponente (A) eingesetzt.

Die erfindungsgemäßen Kautschukmischungen können in bekannter Weise hergestellt werden, beispielsweise durch Vermischen der festen Einzelkomponenten in den dafür geeigneten Aggregaten, wie Walzen, Innenmischern oder Mischextrudern. Die Abmischung der einzelnen Komponenten miteinander erfolgt üblicherweise bei Mischtemperaturen von 20 bis 100°C.

Die erfindungsgemäßen Kautschukmischungen können auch hergestellt werden, indem man aus den Latices der Kautschukkomponente (A) die Komponente (B) in Latexform und die anderen Komponenten in die Latexmischung (Komponenten A+B) einmischt und anschließend durch übliche Operationen, wie Eindampfen, Ausfällen oder Gefrier-Koagulation aufarbeitet.

Ziel bei der Herstellung der erfindungsgemäßen Kautschukmischung ist vor allem, dass die Mischungskomponenten innig miteinander vermischt werden und eine gute Dispersion der eingesetzten Füllstoffe in der Kautschukmatrix erreicht wird.

Die erfindungsgemäßen Kautschukmischungen eignen sich zur Herstellung von Kautschukvulkanisaten durch entsprechende Vernetzungsreaktionen mit den bekannten Vernetzungsagenzien und dienen zur Herstellung von Formkörpern aller Art, insbesondere zur Herstellung von Kabelmänteln, Schläuchen, Treibriemen, Förderbändern, Walzenbeschlägen, Reifenbauteilen, Schuhsohlen, Dichtungsringen, Dämpfungselementen sowie Membranen.

### Beispiele

### Herstellung der Kautschukmikrogele

### Mikrogel (A):

Mikrogel (A) wurde ausgehend von einem SBR-Latex (Baystal BL 1357® der Firma Bayer France, Pôrt Jérôme) durch Vernetzung mit 1,5 phr Dicumylperoxid und durch Pfropfung mit Hydroxyethylmethacrylat hergestellt.

Baystal® BL 1357 ist ein SBR-Latex mit einem Styrolgehalt von 22 Gew.-%, einer Feststoffkonzentration von 37,7 Gew.-% und einem pH von 10,2. Die Latexteilchen wiesen folgende Durchmesser auf: d₁₀ = 52 nm; d₅₀ = 58 nm; d₈₀ = 63 nm; Die Latexteilchen hatten eine Dichte von: 0,9329 g/cm³. Der Gelgehalt des Latex betrug 76 Gew.-%, der Quellungsindex des vergelten Anteils betrug 57 und die Glastemperatur (Tg) betrug: -58 °C.

Der Baystal®-Latex wurde gemäß Beispiel 1 von EP-A 0 854 170 mit 1,5 phr Dicumylperoxid vernetzt. Nach der Umsetzung mit Dicumylperoxid wiesen die Latexteilchen folgende Durchmesser auf: d₁₀ = 52 nm; d₅₀ = 56 nm; d₈₀ = 61 nm auf; die Latexteilchen hatten eine Dichte von: 0,9776 g/cm³. Der Gelgehalt des Latex betrug 97 Gew.-%; der Quellungsindex des vergelten Anteils betrug 5,7 und die Glastemperatur (Tg) betrug -25°C.

Für die Modifikation mit Hydroxyethylmethacrylat legte man den mit 1,5 phr Dicumylperoxid nachvernetzten SBR-Latex in einem Kolben vor und verdünnte den Latex mit Wasser, so dass der Feststoffgehalt des Latex bei 20 Gew.-% lag. Nach dem Zusatz von 3 phr 97 %igem Hydroxymethylmethacrylat, bezogen auf den Latexfeststoffgehalt, und der Zugabe von 0,12 phr 50 %igem p-Methanhydroperoxid erhitzte man unter Rühren die Reaktionsmischung auf 70°C und rührte 1 Stunde bei dieser Temperatur nach. Man gab dann innerhalb von 1 Stunde 0,05 Gew.-%, bezogen auf den Latexfeststoffgehalt, einer wässrigen 0,5 gew.-%igen Lösung des Natriumsalzes von 1-Hydroxymethansulfinsäure-dihydrat (Rongalit®der Fa. BASF) dem Gemisch zu. Während der gesamten Reaktion hielt man den pH-Wert durch Zugabe von 1 N Natronlauge konstant, und zwar auf pH 9. Nach einer Reaktionszeit von 1 Stunde bei 70°C hatte der Latex einen Polymerisationsumsatz von 90 %. Die Dichte der Latexteilchen betrug 0,987 g/cm³. Die Teilchendurchmesser betrugen: d₁₀ = 50 nm; d₅₀ = 57 nm; d₈₀ = 61 nm;

Vor der Fällung des hydroxylmodifizierten SBR-Mikrogels rührte man in den Latex zusätzlich die nachfolgend aufgeführte Alterungsschutzmittel jeweils in den angegebenen Mengen, bezogen auf 100 Gew.-Teile Feststoff, ein:

| | |
|---|---|
| 0,05 phr | 2,2-Methylen-bis-(4-Methyl-6-cyclohexylphenol) (Vulkanox® ZKF der Firma Bayer AG) |
| 0,22 phr | Di-t-Butyl-p-Kresol (Vulkanox® KB der Firma Bayer AG) |
| 0,38 phr | Di-Laurylthiodipropionat (PS 800 der Firma Ciba Geigy AG). |

Zur Fällung von 5,035 kg eines 19,86 %igen mit Hydroxylgruppen modifizierten SBR-Latex legte man 6000 g Wasser, 795,6 g Kochsalz und 425 g Fällungsmittel (Superfloc® C567 (1 %ig) der Firma American Cyanamide Corporation) vor.

Man erhitzte die vorgelegten Fällungsmittel auf 60°C und stellte mit 10 gew.-%iger Schwefelsäure einen pH-Wert von 4 ein. Unter Einhaltung dieses pH-Wertes gab man den modifizierten Latex in das Fällungsagens. Man erhitzte nach Latexzugabe die Mischung auf 60°C und kühlte danach die Mischung durch Zugabe von kaltem Wasser auf ca. 30°C ab. Das dabei ausfallende Kautschukgel wurde mehrmals gewaschen und nach Filtration bei 70°C unter Vakuum bis zur Gewichtskonstanz getrocknet (ca. 60 Stunden).

Das erhaltene Gel (A) besaß einen Gelgehalt von 97 Gew.-%, wobei der Quellungsindex des vergelten Anteils 5,9 betrug. Die OH-Zahl des erhaltenen Gels (A) betrug 9 mg KOH pro Gramm Kautschukgel und die Glastemperatur T_{g} betrug -19°C.

### Herstellung der Kautschukmischungen, deren Vulkanisation sowie die gemessenen physikalischen Werte der Vulkanisate

Auf einer Laborwalze wurden die in der nachfolgenden Tabelle aufgeführten Mischungsbestandteile (Mengenangabe in phr) in üblicher Weise gemischt.

| Mischungs-Nr.: | 1 | 2 | 3 | 4 | 5 |
|---|---|---|---|---|---|
| Mastizierter Naturkautschuk¹⁾ | 100 | 100 | 100 | 100 | 100 |
| Hydroxylmodifiziertes SBR-Gel (A/OBR 1031) | 30 | 30 | 30 | 30 | 30 |
| Stearinsäure | 3,0 | 3,0 | 3,0 | 3,0 | 3,0 |
| Zinkoxid | 3,0 | 3,0 | 3,0 | 3,0 | 3,0 |
| Ozonschutzwachs²⁾ | 1,5 | 1,5 | 1,5 | 1,5 | 1,5 |
| IPPD³⁾ | 1,0 | 1,0 | 1,0 | 1,0 | 1,0 |
| TMQ⁴⁾ | 1,0 | 1,0 | 1,0 | 1,0 | 1,0 |
| Mineralöl-Weichmacher⁵⁾ | 3,0 | 3,0 | 3,0 | 3,0 | 3,0 |
| Schwefel | 1,6 | 1,6 | 1,6 | 1,6 | 1,6 |
| Beschleuniger TBBS⁶⁾ | 2 | 2 | 2 | 2 | 2 |
| Polybiuret auf Basis Hexamethylendiisocyanat⁷⁾ | - | 5 | 10 | - | - |
| Polybiuret auf Basis Hexamethylendiisocyanat⁸⁾ | - | - | - | 5 | 10 |

| | | | | | |
|---|---|---|---|---|---|
| ¹⁾ TSR 5, Defo 700 | | | | | |
| ²⁾ Mischung von Paraffinen und Mikrowachsen (Antilux® 654 der Rheinchemie Rheinau GmbH) | | | | | |
| ³⁾ N-Isopropyl-N'-phenyl-p-phenylendiamin (Vulkanox® 4010 NA der Bayer AG) | | | | | |
| ⁴⁾ 2,2,4-Trimethyl-1,2-dihydrochinolin (polym.) (Vulkanox® HS der Bayer AG) | | | | | |
| ⁵⁾ Enerthene® 1849-1 der Firma BP Oil GmbH | | | | | |
| ⁶⁾ N-tert.Butyl-2-benzthiazylsulfenamid (Vulkacit NZ® der Bayer AG) | | | | | |
| ⁷⁾ Desmodur N® 100 der Bayer AG | | | | | |
| ⁸⁾ Desmodur N® 3200 der Bayer AG | | | | | |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, F_{max.}-Fₐ., t₁₀, t₈₀ und t₉₀ bestimmt.

| Mischungs-NR.: | 1 | 2 | 3 | 4 | 5 |
|---|---|---|---|---|---|
| Fₐ [dNM] | 0,38 | 0,92 | 1,73 | 1,23 | 2,02 |
| Fₘₐₓ - Fₐ [dNM] | 10,42 | 10,15 | 9,69 | 9,72 | 8,89 |
| t₁₀ [min.] | 4,48 | 3,65 | 3,49 | 3,57 | 3,32 |
| t₈₀ [min.] | 6,74 | 6,34 | 6,29 | 6,17 | 5,99 |
| t₉₀ [min] | 8,58 | 7,58 | 7,32 | 7,37 | 6,96 |

Nach DIN 53 529, Teil 3 bedeuten:
Fₐ: Vulkameteranzeige im Minimum der Vernetzungsisotherme
Fₘₐₓ: Maximum der Vulkameteranzeige
t₁₀: Zeit, bei der 10% des Umsatzes erreicht sind
t₈₀: Zeit, bei der 80% des Umsatzes erreicht sind
t₉₀: Zeit, bei der 90% des Umsatzes erreicht sind

Die Mischungen werden in der Presse bei 160°C vulkanisiert, wobei die nachfolgenden Vulkanisationszeiten gewählt wurden:

| Mischungs-Nr.: | 1 | 2 | 3 | 4 | 5 |
|---|---|---|---|---|---|
| Vulkanisationszeit [min] | 20 | 17 | 17 | 16 | 16 |

An den Vulkanisaten wurden folgende Eigenschaften bestimmt:

| Mischungs-Nr.: | 1 | 2 | 3 | 4 | 5 |
|---|---|---|---|---|---|
| Zugfestigkeit (F)[MPa] | 27,3 | 26,1 | 24,5 | 26,7 | 22,7 |
| Bruchdehnung (D) [%] | 605 | 540 | 435 | 515 | 400 |
| Spannungswert bei 100 % Dehnung (S₁₀₀) [MPa] | 1,5 | 2,1 | 2,4 | 2,2 | 2,3 |
| Spannungswert bei 300 %Dehnung (S₃₀₀) [MPa] | 4,9 | 7,7 | 12,0 | 8,8 | 12,7 |
| Härte Shore A, 23°C | 54 | 62 | 65 | 60 | 63 |
| Härte Shore A, 70°C | 50 | 54 | 58 | 52 | 56 |
| Rückprallelastizität, 23°C [%] | 46 | 44 | 52 | 49 | 55 |
| Rückprallelastizität, 70°C [%] | 67 | 63 | 67 | 65 | 69 |
| Abrieb 60er Schmirgel [mm³] | 160 | 104 | 74 | 103 | 110 |
| S₃₀₀ x D | 2965 | 4120 | 4697 | 4532 | 5080 |

### Ergebnis:

In den gelgefüllten Vulkanisaten werden durch die Verwendung von Polyureten auf Diisocyanatbasis (Desmodur® N 100 und Desmodur® N 3200) höhere Härten, höhere Spannungswerte sowie niedrigere Abriebwerte als beim gelgefüllten polyuretfreien Vergleichsvulkanisat gefunden. Außerdem wird das Niveau der mechanischen Eigenschaften, charakterisiert durch das Produkt (S₃₀₀ x D) durch die Polyuretzusätze verbessert.

## Patentansprüche

1. Kautschukmischungen bestehend aus nicht vernetzten, doppelbindungshaltigen Kautschuken (A), vernetzten Kautschukpartikeln (B) sowie multifunktionellen Isocyanaten auf Polyuretbasis (C), wobei, jeweils bezogen auf 100 Gew.-Teile (phr) der Kautschukkomponente (A), der Anteil in der Mischung an Komponente (B) 1 bis 150 Gew.-Teile und der Anteil an multifimktionellen Isocyanaten auf Polyuretbasis (Komponente C) 1 bis 100 Gew.-Teile beträgt.

2. Kautschukmischungen nach Anspruch 1, **dadurch gekennzeichnet, dass** jeweils bezogen auf 100 Gew.-Teile der Kautschukkomponente (A) 5 bis 100 Gew.-Teile an vernetzten Kautschukpartikeln (B) und 3 bis 50 Gew.-Teile an multifunktionellen Isocyanaten (C) in der Kautschukmischung vorhanden sind.

3. Kautschukmischungen nach Anspruch 1, **dadurch gekennzeichnet, dass** die vernetzten Kautschukpartikel (B) Teilchendurchmesser von 5 bis 1 000 nm und Quellungsindizes in Toluol von 1 bis 15 aufweisen.

4. Kautschukmischungen nach Anspruch 1, **dadurch gekennzeichnet, dass** als multifunktionelle Isocyanate auf Polyuretbasis (C) Isocyanate mit mindestens zwei Isocyanatgruppen im Molekül eingesetzt werden.

5. Verwendung der Kautschukmischungen nach Anspruch 1 zur Herstellung von Kautschukvulkanisaten.

6. Verwendung der Kautschukmischungen nach Anspruch 1 zur Herstellung von Kautschukformkörpern aller Art, insbesondere zur Herstellung von Kabelmänteln, Schläuchen, Treibriemen, Förderbändern, WaLzenbeschlägen, Reifenbauteilen, Schuhsohlen, Dichtungsringen, Dämpfungselementen sowie Membranen.

## Claims

1. Rubber mixtures composed of uncrosslinked, double-bond-containing rubbers (A), crosslinked rubber particles (B) and multifunctional polyurethane-based isocyanates (C) wherein the amount of component (B) in the mixture is from 1 to 150 parts by weight and the amount of multifunctional polyurethane-based isocyanates (component C) is from 1 to 100 parts by weight, in each case based on 100 parts by weight (phr) of the rubber component (A).

2. Rubber mixtures according to Claim 1, **characterized in that** crosslinked rubber particles (B) are present at from 5 to 100 parts by weight and multifunctional isocyanates (C) at from 3 to 50 parts by weight in the rubber mixture, in each case based on 100 parts by weight of the rubber component (A).

3. Rubber mixtures according to Claim 1, **characterized in that** the crosslinked rubber particles (B) have particle diameters of from 5 to 1000 nm and swelling indices in toluene of from 1 to 15.

4. Rubber mixtures according to Claim 1, **characterized in that** isocyanates with at least two isocyanate groups in the molecule are used as polyurethane-based multifunctional isocyanates (C).

5. Use of the rubber mixtures according to Claim 1 for producing rubber vulcanizates.

6. Use of the rubber mixtures according to Claim 1 for producing moulded rubber bodies of all kinds, especially for producing cable sheaths, hoses, drive belts, conveyor belts, roller coverings, tyre components, shoe soles, gaskets, damping elements and membranes.

## Revendications

1. Mélanges de caoutchoucs, constitués par des caoutchoucs non réticulés, contenant des doubles liaisons (A), des particules de caoutchouc réticulé (B) ainsi que des isocyanates multifonctionnels à base de polyuréthane (C), où, à chaque fois par rapport à 100 parties en poids (phr) du composant de caoutchouc (A), la proportion dans le mélange de composant (B) est de 1 à 150 parties en poids et la proportion d'isocyanates multifonctionnels à base de polyuréthane (composant C) est de 1 à 100 parties en poids.

2. Mélanges de caoutchoucs selon la revendication 1, **caractérisés en ce que**, à chaque fois par rapport à 100 parties en poids du composant de caoutchouc (A), on trouve 5 à 100 parties en poids de particules de caoutchouc réticulé (B) et 3 à 50 parties en poids d'isocyanates multifonctionnels (C) dans le mélange de caoutchoucs.

3. Mélanges de caoutchoucs selon la revendication 1, **caractérisés en ce que** les particules de caoutchouc réticulé (B) présentent un diamètre de particule de 5 à 1000 nm et un indice de gonflement dans du toluène de 1 à 15.

4. Mélanges de caoutchoucs selon la revendication 1, **caractérisés en ce qu'**on utilise comme isocyanates multifonctionnels à base de polyuréthane (C) des isocyanates comprenant au moins deux groupes isocyanate dans la molécule.

5. Utilisation des mélanges de caoutchoucs selon la revendication 1 pour la préparation de produits de vulcanisation à base de caoutchouc.

6. Utilisation des mélanges de caoutchoucs selon la revendication 1 pour la réalisation de corps façonnés en caoutchouc de tous types, en particulier pour la réalisation de gaines de câbles, de flexibles, de courroies, de bandes transporteuses, de revêtements de cylindre, de pièces pour pneumatiques, de semelles de chaussures, de joints annulaires, d'éléments d'amortissement ainsi que de membranes.
